# EUROPÄISCHE PATENTSCHRIFT

(11) **EP 1 470 839 B1**
(45) Veröffentlichungstag und Bekanntmachung des Hinweises auf die Patenterteilung: **19.04.2006**
(21) Anmeldenummer: 04008824.7
(22) Anmeldetag: 14.04.2004
(51) Int. Cl.: A62C 3/08, A62C 2/06, B64D 11/02

(54) **Vorrichtung zur Bekämpfung eines in einer Toilette eines Flugzeuges auftretenden Feuers**
Device for fighting a fire aboard an aircraft lavatory
Dispositif pour combattre un feu dans une toilette d'aéronef

(30) Priorität: 26.04.2003 DE 10318974
(43) Veröffentlichungstag der Anmeldung: 27.10.2004
(73) Patentinhaber: Airbus Deutschland GmbH, 21129 Hamburg (DE)
(72) Erfinder: Bobenhausen, Axel, 28759 Bremen (DE)
(74) Vertreter: Hansmann, Dierk

(56) Entgegenhaltungen:
- EP-A- 1 283 065
- WO-A-00/67849
- DE-U- 29 712 909
- GB-A- 2 159 051
- GB-A- 2 334 674
- GB-A- 2 376 706

## Beschreibung

Die Erfindung betrifft eine Flugzeugtoilette, die vorzugsweise im Türbereich angeordnete Lufteintrittsöffnungen zur Zufuhr von Luft und einen Abluftkanal zur Abfuhr von Luft aufweist, wobei der Abluftkanal insbesondere im Deckenbereich der Toilette angeordnet ist.

In Sonderbereichen eines Flugzeuges, wie zum Beispiel in Flugzeugtoiletten, erfolgt eine Luftabsaugung, die auf einem Druckunterschied im Fluge basiert und/oder mittels einer Ventilationseinrichtung durchgeführt wird. Im Falle eines in einer Flugzeugtoilette ausgebrochenen Feuers kann bisher weder die Luftabsaugung unterbrochen noch kann die Ventilation lokal abgestellt werden. Somit wird im Falle eines Feuers in nachteiliger Weise der Toilette weiterhin Luft/Sauerstoff zugeführt.

In der GB - A - 2 159 051 sind Panelelemente zur Abdeckung einer Be- oder Entlüftungsöffnung eines Lüftungsrohres beschrieben, die mit Hilfe von, durch Hitzeeinwirkung aufschäumenden Materialien zwecks Eindämmung von Feuern verschlossen werden. Ein derartiges Panelelement besteht aus einer Platte mit geformten Durchbohrungen, wobei sich auf der rückwärtigen Seite der Platte von jeder Durchbohrung ein rohrförmiger Flansch erstreckt. Jeder Flansch weist auf seiner inneren Oberfläche eine Schicht aus intumeszentem Material auf, welches eine Öffnung durch jeden rohrförmigen Flansch offenläßt. Hierdurch wird ermöglicht, dass bei Hitzeeinwirkung das intumeszente Material aufschäumt und die jeweils zugehörige Öffnung verschlossen wird. Ein anderes Panel ist als Jalousie ausgebildet, bei dem jede schlitzförmige Öffnung der Jalousie auf ihrer Rückseite mit intumeszentem Material versehen ist. Wird das intumeszente Material höheren Temperaturen ausgesetzt, so verschließt es aufgrund seiner Aufschäumwirkung den jeweils zugeordneten Jalousienschlitz. Die Panelelemente dienen somit lediglich zur Verhinderung der Ausbreitung eines Feuers durch ein Lüftungsrohr.

Aus der DE - U - 297 12 909 ist eine selbsttätig schließende Brandschutzeinrichtung bekannt, die als ein in eine Rohrleitung einfügbares Element zur Abschottung eines Strömungskanals eines Lüftungs- und/oder Klimatisierungssystems ausgebildet ist. Die Einrichtung weist eine bei Einwirkung von Hitze ihr Volumen vergrößernde Brandschutzmasse auf, welche in Form einer den Strömungskanal auf gleicher Achse liegend umgreifenden Manschette ausgebildet ist. Hierbei ist die Brandschutzmasse von einem hohlzylindrischen Hohlkörper eingeschlossen, wobei die Innenwandung des Hohlkörpers bei gleicher Druckauflastung eine größere Verformbarkeit aufweist als dessen Außenwandung. Diese Brandschutzeinrichtung ist dazu geeignet, im Falle eines Brandes die Brandausbreitung über Kanäle von Lüftungs- und Klimaanlagen zu verhindern.

Die GB - A - 2 376 706 offenbart einen Feuer verzögernden Streifen zur Befestigung auf flachen Trägeroberflächen, beispielsweise mittels Klebebändern. Der Streifen umfasst einen verlängerten Tragkörper mit einer äußeren Vorderseite und einer gegenüberliegenden inneren Vorderseite. Längsseits des Tragkörpers erstreckt sich mindestens ein Paar von räumlich getrennten Kanälen, die zur inneren Vorderseite geöffnet und in denen intumeszetes Material angeordnet ist. Dieser Feuer verzögernde Streifen lässt sich z. B. an Kanten bzw. Rahmen von Türen befestigen.

Weiterhin ist in der EP -A- 1 283 065 ein Feuerunterdrückungssystem für eine Flugzeugtoilette beschrieben. Das System schließt eine Wasserversorgung, welche über Durchflussleitungen mit einer oder mehreren Löschdüsen gekuppelt ist, und eine Druckquelle zur Unterstützung des Wasserdurchflusses durch die Leitungen ein. Das System erzeugt an den Löschdüsen jeweils einen Sprühregen von Wasser, der zur Feuerunterdrückung in einem Abfallbehälter oder im gesamten Toilettenbereich geeignet ist. Vorgesehene hitzeempfindliche Ventile ermöglichen es, dass das System einen Feuerbeginn automatisch detektiert.

Der Erfindung liegt nun die Aufgabe zugrunde, die eingangs angeführten Nachteile zu beseitigen und die Zufuhr und Abfuhr von Luft bzw. Sauerstoff bei Auftritt eines Feuers in einer Flugzeugtoilette zu unterbrechen.

Die Aufgabe wird erfindungsgemäß dadurch gelöst, dass sowohl in der Nähe der Lufteintrittsöffnungen als auch im Bereich des Abluftkanals jeweils ein durch Hitzeeinwirkung aufschäumendes feuerfestes Material installiert ist, dass bei Auftritt eines Feuers einerseits die Lufteintrittsöffnungen durch das aufschäumende Material zur Verhinderung der Luftzufuhr abgedichtet werden, und dass anderseits der Abluftkanal der Toilette durch das aufschäumende Material abgedichtet wird, um die Luftabfuhr durch den Abluftkanal zu verhindern.

Erfindungsgemäße Weiterbildungen sind dadurch gekennzeichnet,
- dass das aufschäumende und feuerfeste Material parallel zu den Lufteintrittsöffnungen eines im Türbereich der Toilette angeordneten Gitters angeordnet ist,
- dass das aufschäumende und feuerfeste Material an der Innenwand des Abluftkanals angeordnet ist,
- dass das aufschäumende und feuerfeste Material an einer Lochgitteranordnung installiert ist, die in der Decke der Toilette vor dem Abluftkanal angeordnet ist, und
- dass das angeordnete aufschäumende und feuerfeste Material in Form eines Klebebandes ausgebildet ist.

Ein wesentlicher Vorteil der erfindungsgemäßen Flugzeugtoilette liegt in einer einfachen Handhabung der Bekämpfung eines Feuers in Flugzeugtoiletten oder in Kabinen-Sonderbereichen, wie Besatzungsruheräumen mit passiven Mitteln. Vorteilhaft sind auch die geringeren Kosten im Vergleich zu "aktiven" Systemen, beispielsweise das Verschließen durch ventilanordnungen oder Verschlußeinrichtungen.

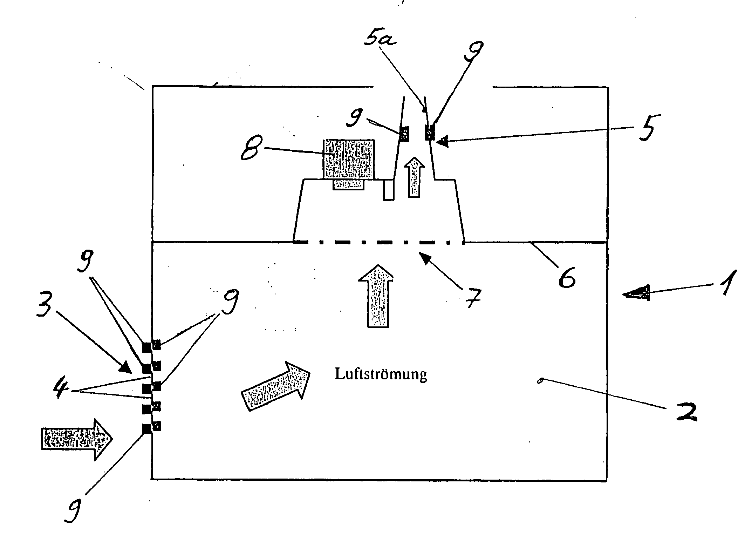

In der Zeichnung ist ein Ausführungsbeispiel nach der Erfindung als eine Prinzipdarstellung eines Toilettenraumes in einem Flugzeug schematisch dargestellt.

Die Toilette 1 weist ein Gitter 3 mit Lufteintrittsöffnungen 4 auf, wobei das Gitter 3 vorzugsweise im Türbereich der Toilette 1 angeordnet ist. Durch die Lufteintrittsöffnungen 4 erfolgt eine Luftzufuhr in den Innenraum 2 der Toilette 1. Weiterhin weist die Toilette einen Abluftkanal 5 auf, welcher einen zeichnerisch nicht dargestellten Ventilator enthalten kann und über eine weitere Loch-Gitteranordnung 7 mit dem Innenraum 2 der Toilette 1 zur Luftabfuhr in Verbindung steht. Die Gitteranordnung 7 ist vorzugsweise in der Decke 6 der Toilette 1 installiert, wobei oberhalb der Gitteranordnung 7 auch ein Rauchdetektor 8 vorgesehen ist.

Wie aus der Zeichnung weiter zu ersehen ist, sind in der Nähe der Lufteintrittsöffnungen 4 des Gitters 3 und an der Innenwand 5a des Abluftkanals 5 jeweils durch Hitzeeinwirkung aufschäumende, volumenvergrößernde feuerfeste Materialien 9 installiert. Diese Materialien 9, die zweckmäßigerweise in Form von Klebebändern verwendet werden, werden bei Auftritt eines Feuers in der Toilette erhitzt und derart aufgeschäumt, daß die zugeordneten Lufteintrittsöffnungen 4 bzw. der Abluftkanal 5 abgedichtet und die Luft-/Sauerstoffzufuhr durch diese Einlässe bzw. Auslässe vermindert bzw. verhindert wird. Die aufschäumenden und feuerfesten Materialien 9 werden in bevorzugter Weise parallel zu den Lufteintrittsöffnungen 4 des Gitters 3 angeordnet. Für den Bereich des Abluftkanals 5 ist es auch möglich, die aufschäumenden und feuerfesten Materialien 9 an der Lochgitteranordnung 6 zu installieren, die in der Decke 7 der Toilette 1 vor dem Abluftkanal 5 angeordnet wird. Als aufschäumende und feuerfeste Materialien 9 kann das unter der Markenbezeichnung "Palusol" von der Fa. BASF AG auf dem Markt angebotene Material verwendet werden.

## Patentansprüche

1. Flugzeugtoilette, die vorzugsweise im Türbereich angeordnete Lufteintrittsöffnungen (4) zur Zufuhr von Luft und einen Abluftkanal (5) zur Abfuhr von Luft aufweist, wobei der Abluftkanal (5) insbesondere im Deckenbereich der Toilette (1) angeordnet ist, **dadurch gekennzeichnet, dass**
sowohl in der Nähe der Lufteintrittsöffnungen (4) als auch im Bereich des Abluftkanals (5) jeweils ein durch Hitzeeinwirkung aufschäumendes feuerfestes Material (9) installiert ist, dass bei Auftritt eines Feuers einerseits die Lufteintrittsöffnungen (4) durch das aufschäumende Material (9) zur Verhinderung der Luftzufuhr abgedichtet werden, und dass anderseits der Abluftkanal (5) der Toilette (1) durch das aufschäumende Material (9) abgedichtet wird, um die Luftabfuhr durch den Abluftkanal (5) zu verhindern.

2. Flugzeugtoilette nach Anspruch 1, **dadurch gekennzeichnet, dass**
das aufschäumende und feuerfeste Material (9) parallel zu den Lufteintrittsöffnungen (4) eines im Türbereich der Toilette (1) angeordneten Gitters (2) angeordnet ist.

3. Flugzeugtoilette nach Anspruch 1 oder 2, **dadurch gekennzeichnet, dass** das aufschäumende und feuerfeste Material (9) an der Innenwand (5a) des Abluftkanals (5) angeordnet ist.

4. Flugzeugtoilette nach Anspruch 1, 2 oder 3, **dadurch gekennzeichnet, dass** das aufschäumende und feuerfeste Material (9) an einer Lochgitteranordnung (7) installiert ist, die in der Decke (6) der Toilette (1) vor dem Abluftkanal (5) angeordnet ist.

5. Flugzeugtoilette nach einem der vorgehenden Ansprüche 1 bis 4,
**dadurch gekennzeichnet, dass**
das angeordnete aufschäumende und feuerfeste Material (9) in Form eines Klebebandes ausgebildet ist.

## Claims

1. An aircraft toilet, which comprises air inlet openings (4) preferably arranged in the door area for supplying air and an exhaust air duct (5) for removing air, the exhaust air duct (5) being arranged in particular in the ceiling area of the toilet (1), **characterised in that**
both in the vicinity of the air inlet openings (4) and in the area of the exhaust air duct (5) there is in each case installed a fire-resistant material (9) which intumesces on exposure to heat, **in that**, in case of fire, on the one hand the air inlet openings (4) are sealed by the intumescent material (9) to prevent air supply, and **in that** on the other hand the exhaust air duct (5) of the toilet (1) is sealed by the intumescent material (9), in order to prevent air from being removed by the exhaust air duct (5).

2. An aircraft toilet according to claim 1, **characterised in that** the intumescent, fire-resistant material (9) is arranged parallel to the air inlet openings (4) of a grille (2) arranged in the door area of the toilet (1).

3. An aircraft toilet according to claim 1 or 2, **characterised in that** the intumescent, fire-resistant material (9) is arranged on the internal wall (5a) of the exhaust air duct (5).

4. An aircraft toilet according to claim 1, 2 or 3, **characterised in that** the intumescent, fire-resistant material (9) is installed on the perforated grille arrangement (7) which is arranged in the ceiling (6) of the toilet (1) in front of the exhaust air duct (5).

5. An aircraft toilet according to any one of preceding claims 1 to 4, **characterised in that** the intumescent, fire-resistant material (9) provided takes the form of an adhesive tape.

## Revendications

1. Toilette d'avion, présentant de préférence dans la zone de la porte des ouvertures d'entrée d'air (4) pour amener de l'air et un canal de sortie d'air (5) pour évacuer celui-ci, ce canal étant disposé notamment dans la zone du plafond de la toilette, **caractérisée en ce qu'**aussi bien à proximité des ouvertures d'entrée d'air (4) que dans la zone du canal de sortie d'air (5) est installé un matériau résistant au feu et se transforme en mousse par l'effet de la chaleur, de sorte que, quand un feu se déclenche, d'une part les ouvertures d'entrée d'air (4) sont obturées par le matériau (9) qui se transforme en mousse en faisant ainsi obstacle à l'amenée d'air, d'autre part le canal de sortie d'air (5) de la toilette (1) est obturé par le matériau (9) qui se transforme en mousse, en faisant ainsi obstacle à l'évacuation de l'air par le canal de sortie d'air (5).

2. Toilette d'avion selon la revendication 1, **caractérisée en ce que** le matériau (9) résistant au feu et qui se transforme en mousse est disposé parallèlement aux ouvertures d'entrée d'air (4) d'une grille (3) montée dans la zone de porte de la toilette (1)..

3. Toilette d'avion selon la revendication 1 ou 2, **caractérisée en ce que** le matériau (9) résistant au feu et qui se transforme en mousse est monté sur la paroi interne (5a) du canal de sortie d'air (5).

4. Toilette d'avion selon la revendication 1, 2 ou 3, **caractérisée en ce que** le matériau (9) résistant au feu et qui se transforme en mousse est installé sur un système de grille perforée (7) montée dans le plafond (6) de la toilette (1) devant le canal de sortie d'air (5).

5. Toilette d'avion selon une des revendications 1 à 4, **caractérisée en ce que** le matériau (9) résistant au feu et qui se transforme en mousse est sous la forme d'une bande adhésive.
